Europäisches Patentamt

European Patent Office

Office européen des brevets

(11) Veröffentlichungsnummer: **0 235 495**
**A1**

## (12) EUROPÄISCHE PATENTANMELDUNG

(21) Anmeldenummer: 86810111.4

(22) Anmeldetag: 03.03.86

(51) Int. Cl.4: **F16H 3/08**

(43) Veröffentlichungstag der Anmeldung:
09.09.87 Patentblatt 87/37

(84) Benannte Vertragsstaaten:
BE FR GB IT LU NL SE

(71) Anmelder: **Andreas Jutzeler Stockhorngarage**

**CH-3762 Erlenbach im Simmental(CH)**

(72) Erfinder: **Jutzeler, Andreas**
**Stockhorngarage**
**CH-3762 Erlenbach im Simmental(CH)**

(74) Vertreter: **Tschudi, Lorenz et al**
**Bovard AG Patentanwälte VSP**
**Optingenstrasse 16**
**CH-3000 Bern 25(CH)**

(54) **Landwirtschaftlicher Motorkarren.**

(57) Das Zwischengetriebe umfasst drei Wellen (6, 7, 12) und sechs auf den Wellen aufgesetzte Zahnräder (4, 5, 8, 9, 10 und 11). Als zusätzliche Untersetzungsstuffe des Getriebes funktioniert das auf der Eingangswelle (6) fest aufgesetzte Zahnrad (4) und das auf der Gegenwelle (7) fest aufgesetzte Gegenrad (5). Diese beiden Räder (4, 5) stehen zueinander in Dauereingriff. Das Eingangswellenzahnrad (4) weist achtzehn Zähne (13) auf und ist eines Moduls von 2,5. Das Gegenrad (5) weist neununddreissig Zähne 16 auf und ist ebenfalls eines Moduls von 2,5. Durch diese Anordnung der Zahnräder in dem Zwischengetriebe wird ohne Aenderung seiner Ausmasse und bei genau gleicher Schaltung beim landwirtschaftlichen Motorkarren im direkten Strassengang bei einer Geschwindigkeit von 25 km/h eine optimale Tourenzahl von ca. 3600 bis 3800 U/min. erzielt.

FIG. 2

## Landwirtschaftlicher Motorkarren

Die Erfindung geht aus von einem landwirtschaftlichen Motorkarren, mit einem mit dem Antriebsmotor gekoppelten Hauptgetriebe und einem mit dem Hauptgetriebe über eine Gelenkwelle gekoppelten Zwischengetriebe, das zueinander parallel verlaufende und mit Zahnrädern versehene Eingangs-, Gegen-und Ausgangswellen aufweist und mittels welchen wahlweise Zwei-oder Vierradantrieb bzw. Schnell-oder Geländegang bei Vierradantrieb einschaltbar ist.

Mittels eines bekannten, in einem geländegängigen Fahrzeug eingebauten Zwischengetriebe kann jeder Gang des mit dem Motor gekoppelten Hauptgetriebes untersetzt werden. Dabei kann ein Strassengang mit nur Hinterradantrieb oder mit Vierradantrieb eingeschaltet werden. Desweiteren kann ein Schnellgang oder Geländegang bei Vierradantrieb wahlweise eingeschaltet werden.

Um die Verwendung des geländegängigen Fahrzeuges nur für landwirtschaftliche Zwecke zu ermöglichen, mussten die Strassengänge blockiert werden, so dass das Fahrzeug immer nur im Vierradantrieb fuhr. Dabei betrug die Motordrehzahl etwa 1800 bis 2000 U/min., das heisst, dass der Motor keine optimale Leistung abgeben konnte.

Der im Patentanspruch 1 angegebenen Erfindung lag die Aufgabe zugrunde, einen landwirtschaftlichen Motorkarren zu schaffen, der im direkten Strassengang bei einer Geschwindigkeit von 25 km/h bis 40 km/h immer noch eine optimale Tourenzahl von ca. 3600 bis 3800 U/min. besitzt. Dies sollte ohne wesentliche Aenderung der Ausmasse des bestehenden Zwischengetriebegehäuses bei genau gleicher Schaltung erreicht werden.

Die Aufgabe der Erfindung wird bei einem landwirtschaftlichen Motorkarren nach dem Oberbegriff des Patentanspruches 1 durch die Merkmale der Kennzeichnung des Patentanspruches 1 gelöst.

Es ist von Vorteil, wenn das Zahnrad auf der Eingangswelle achtzehn Zähne und das Gegenrad auf der Gegenwelle neununddreissig Zähne aufweist, wobei die beiden Räder gleichen Moduls sind, und wenn das dem Hauptgetriebe zugewandte Zwischenrad vierundzwanzig Zähne und das dem Hauptgetriebe abgewandte Zwischenrad neunzehn Zähne aufweist, wobei die beiden Räder ungleichen Moduls sind.

Der Erfindungsgegenstand wird nachstehend anhand der Zeichnung beispielsweise näher erläutert. Es zeigen

Fig. 1 eine schematische Darstellung eines bekannten an einem Hauptgetriebe angekoppelten Zwischengetriebes mit drei Wellen und fünf Zahnrädern,

Fig. 2 eine schematische Darstellung des erfindungsgemässen Zwischengetriebes mit drei Wellen und sechs Zahnrädern, bei welchem der Kraftfluss von der Eingangswelle auf die Hinterachse übertragen wird,

Fig. 3 eine schematische Darstellung des Zwischengetriebes nach der Fig. 2, wobei der Kraftfluss von der Eingangswelle auf die Hinter-und Vorderachsen im Schnellgang übertragen wird, und

Fig. 4 eine schematische Darstellung des Zwischengetriebes nach der Fig. 2, wobei der Kraftfluss von der Eingangswelle auf die Hinter-und Vorderachsen im Geländegang übertragen wird.

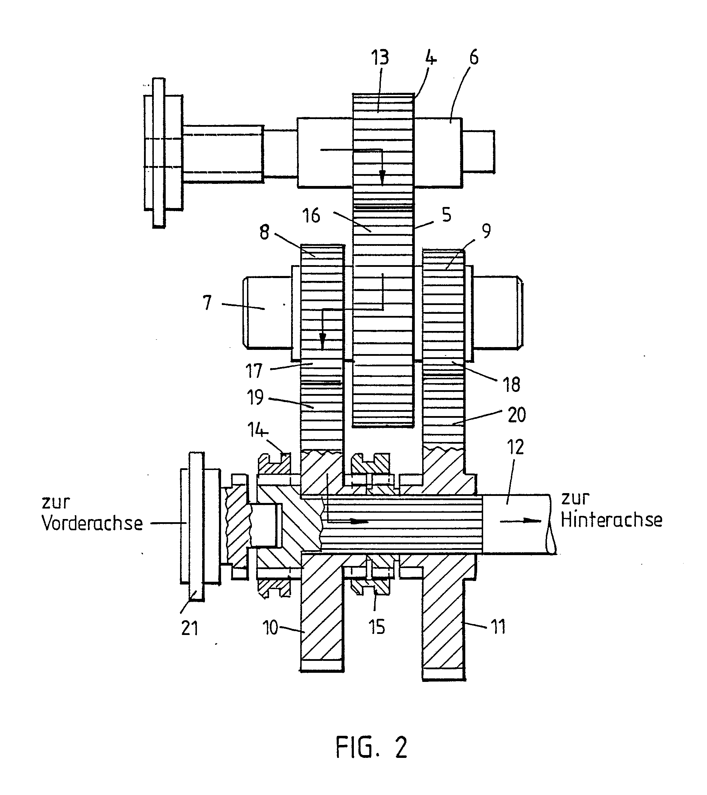

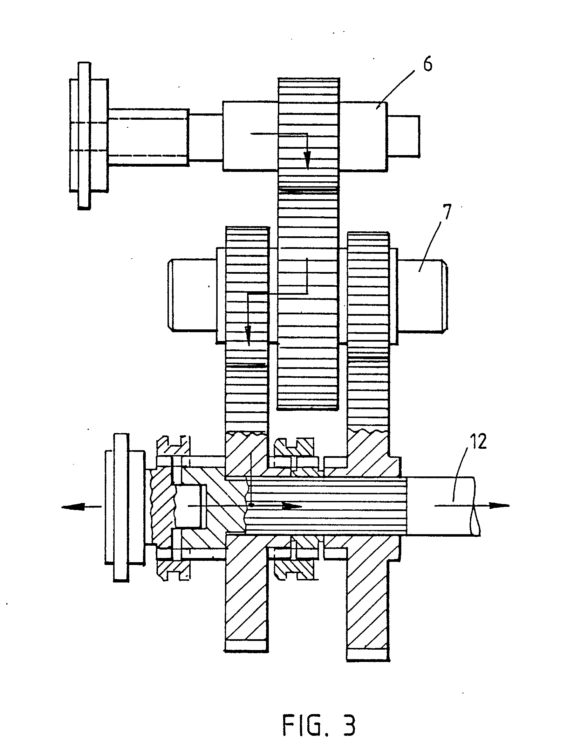

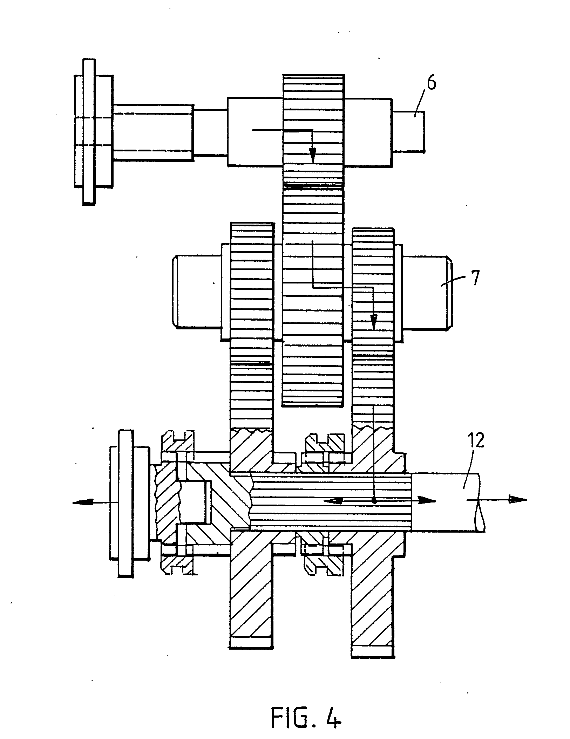

Es ist bekannt, dass der Verbrennungsmotor seine Höchstleistung und sein grösstes Drehmoment nur in einem eng begrenzten Drehzahlbereich abgibt. Das optimale Drehmoment des Motors eines landwirtschaftlichen Motorkarrens ist 3300 U/min., das heisst, dass der Motor eine Tourenzahl von 3700 bis 4000 U/min. erreichen soll, um optimale Leistung zu erbringen. Dies wird erreicht durch die Anordnung der Zahnräder und deren Wellen in einem Zwischenrgetriebe 3 nach den Fig. 2 bis 4.

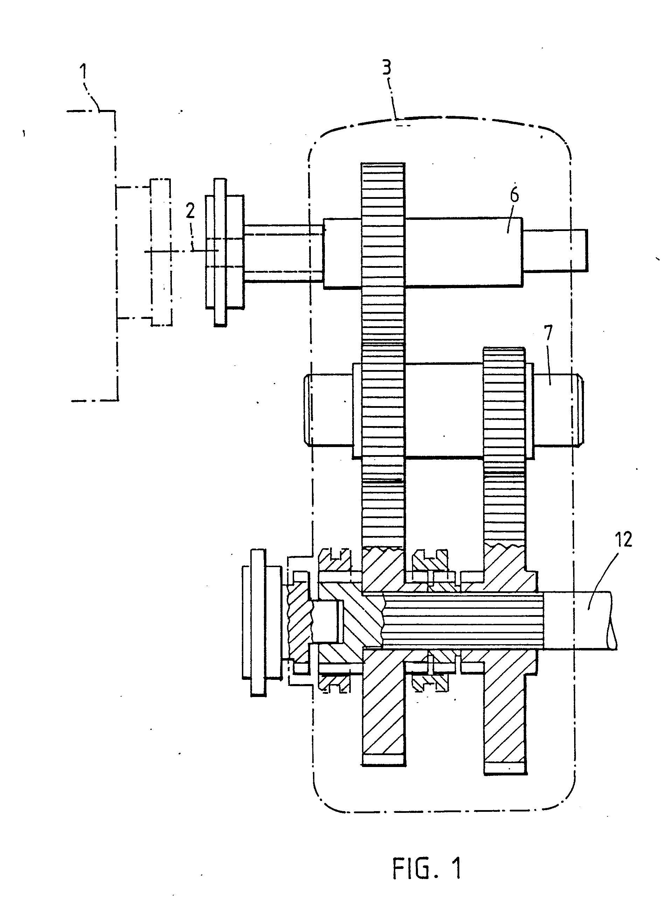

Das in einem Gehäuse 3 untergebrachte Zwischengetriebe ist mit einem mit dem nicht dargestelltem Antriebsmotor gekoppelten Haupzahnradgetriebe 1 über eine Gelenkwelle 2 gekoppelt (Fig. 1). Auf der Eingangswelle 6 ist ein Zahnrad 4 fest aufgekeilt. Auf einer zu der Eingangswelle 6 parallel verlaufenden Gegenwelle 7 ist ein Gegenrad 5 fest aufgekeilt, das mit dem Zahnrad 4 der Eingangswelle 6 im Dauereingriff steht. Das Eingangswellenzahnrad 4 weist achtzehn Zähne 13 auf und ist eines Moduls von 2,5. Das Gegenrad 5 weist neununddreissig Zähne 16 auf und ist ebenfalls eines Moduls von 2,5. Das Eingangswellenzahnrad 4 bildet mit dem Gegenrad 5 eine zusätzliche Untersetzungsstufe.

Auf der Gegenwelle 7 sind weiter beidseitig des Gegenrades 5 je ein Zwischenrad 8, 9 fest aufgekeilt. Das in der Fig. links, das heisst, das dem Hauptgetriebe 1 zugewandte Zwischenrad 8 weist vierundzwanzig Zähne 17 und ein Modul von 2,25 auf. Das in der Fig. rechts gesehene Zwischenrad 9 weist neunzehn Zähne 18 und ein Modul von 2,5 auf.

Beim Kraftfluss von der Eingangswelle 6 zur Hinterachse des Motorkarrens ist das mit vierundzwanzig Zähnen 17 versehene Zwischenrad 8 mit einem auf einer zu der Eingangswelle 6 und der Gegenwelle 7 ebenfalls parallel verlaufenden Ausgangswelle 12 angeordneten Kupplungsrad 10 mit achtundfünfzig Zähnen 19 gekuppelt. Dies geschieht mittels eines Kupplungslaufringes 15, der durch einen nicht dargestellten Schalthebel in Eingriff mit dem Kupplungsrad 10 gedrückt wird. Dabei dreht sich das andere, dreiundfünfzig Zähne 20 aufweisende Kupplungsrad 11 lose auf der Ausgangswelle 12 (Fig. 2).

Es ist möglich, im gleichbleibenden Gehäuse 3 auch andere Uebersetzungen zu wählen, wie z.B. mit 40 km/h bei 3600 U/min. Das heisst, dass beim günstigsten Drehmoment die grösste Wirtschaftlichkeit des Motors erzielt werden kann.

Wenn die Antriebskraft von der Eingangswelle 6 sowohl zur Hinterachse als auch zur Vorderachse des Motorkarrens fliesst, kann der Vierradantrieb im Schnellgang oder im Geländegang erfolgen. Beim Vierradantrieb im Schnellgang fliesst die Antriebskraft über das Kupplungsrad 10, auf welches der Kupplungslaufring 15 -wie in der Fig. 2 dargestellt -aufgedrückt wurde, wobei dieses Kupplungsrad 10 mittels des Kupplungslaufringes 14 auch mit der Kupplung 21 der Vorderachse gekuppelt ist.

Beim Vierradantrieb im Geländegang fliesst die Antriebskraft von der Eingangswelle 6 über das Zwischenrad 9 und das Kupplungsrad 11. In diesem Fall ist der Kupplungslaufring 15 an dem Kupplungsrad 11 angedrückt, wobei der Kupplungslaufring 14 mit der Kupplung 21 gekuppelt ist.

Um einen wirksamen Schutz gegen die Uebertretung der Drehzahl des Motors zu erzielen, wird ein an sich bekannter Drehzahlbegrenzer verwendet werden, der die Motorendrehzahl bei voller Motorenleistung regelt.

## Ansprüche

1. Landwirtschaftlicher Motorkarren, mit einem mit dem Antriebsmotor gekoppelten Hauptgetriebe (1) und einem mit dem Hauptgetriebe (1) über eine Gelenkwelle (2) gekoppelten Zwischengetriebe, das zueinander parallel verlaufende und mit Zahnrädern versehene Eingangs-(6), Gegen-(7) und Ausgangswellen (12) aufweist und mittels welchen wahlweise Zwei-oder Vierradantrieb bzw. Schnell-oder Geländegang bei Vierradantrieb einschaltbar ist, dadurch gekennzeichnet, dass im Zwischengetriebe eine Zusatzuntersetzungsstufe eingebaut ist, die ein auf der Eingangswelle (6) fest aufgesetztes Zahnrad (4) und ein auf der Gegenwelle (7) zwischen zwei Zwischenrädern (8, 9) fest aufgesetztes Gegenrad (5) umfasst, das mit dem Zahnrad (4) der Eingangswelle (6) im Dauereingriff steht, wobei jedes auf der Gegenwelle (7) ebenfalls fest aufgesetztes Zwischenrad (8, 9) mit einem auf der Ausgangswelle (12) lose drehbaren Kupplungsrad (10, 11) im Dauereingriff steht.

2. Motorkarren nach Patentanspruch 1, dadurch gekennzeichnet, dass das Zahnrad (4) der Eingangswelle (6) achtzehn Zähne (13) und das Gegenrad (5) der Gegenwelle (7) neununddreissig Zähne (16) aufweist, wobei die beiden Räder (4, 5) gleichen Moduls sind.

3. Motorkarren nach Patentanspruch 1, dadurch gekennzeichnet, dass das dem Hauptgetriebe (1) zugewandte Zwischenrad (8) vierundzwanzig Zähne (17) und das dem Hauptgetriebe (1) abgewandte Zwischenrad (9) neunzehn Zähne (20) aufweist, wobei die beiden Räder (8, 9) ungleichen Moduls sind.

FIG. 1

FIG. 2

FIG. 3

FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | AT - B - 172 992 (MOTOR CAR WORKS) <br> * Gesamt * <br> -- | 1 | F 16 H 3/08 |
| A | AT - B - 173 299 (MOTOR CAR WORKS) <br> * Gesamt * <br> -- | 1 | |
| A | DE - C - 391 269 (ETS.BAUDET & DONON) <br> * Gesamt * <br> -- | 1 | |
| A | GB - A - 2 112 088 (TOYOTA) <br> * Gesamt * <br> ---- | 1 | |

RECHERCHIERTE SACHGEBIETE (Int. Cl.4)

B 60 K 17/00

F 16 H  3/00

F 16 H 37/00

Der vorliegende Recherchenbericht wurde für alle Patentansprüche erstellt.

| Recherchenort | Abschlußdatum der Recherche | Prüfer |
|---|---|---|
| WIEN | 08-10-1986 | SCHATEK |